# EUROPÄISCHE PATENTANMELDUNG

(11) **EP 2 377 706 A2**
(43) Veröffentlichungstag der Anmeldung: **19.10.2011**
(21) Anmeldenummer: 11162556.2
(22) Anmeldetag: 15.04.2011
(51) Int. Cl.: B60J 7/057

(54) **Spiralkabelantrieb einer beweglichen Einrichtung eines Kraftfahrzeugs**

(30) Priorität: 16.04.2010 DE 102010015130
(71) Anmelder: Wilhelm Karmann GmbH i.l., 49084 Osnabrück (DE)
(72) Erfinder: Habacker, Norbert, 49565, Bramsche (DE)
(74) Vertreter: Kronthaler, Wolfgang N.K.

(57) **Zusammenfassung**

Es wird ein Spiralkabelantrieb (7) einer beweglichen Einrichtung (3) eines Kraftfahrzeugs (1) vorgeschlagen, mit wenigstens einem mehrere Windungen aufweisenden Spiralkabel (15, 17), welches zur Bewegung der Einrichtung (3) über eine mechanische Wirkverbindung mit einer Antriebseinrichtung (23) verbunden ist, wobei eine Antriebswandlereinrichtung (48) eine rotatorische Antriebsbewegung der Antriebseinrichtung (23) in eine translatorische Bewegung des Spiralkabels (15, 17) wandelt. Die Antriebswandlereinrichtung (48) weist wenigstens eine die rotatorische Antriebsbewegung aufnehmende Spindelmutter (49, 51) auf, welche das Spiralkabel (15, 17) im Bereich wenigstens einer Windung umgreift.

## Beschreibung

Die Erfindung betrifft einen Spiralkabelantrieb einer beweglichen Einrichtung eines Kraftfahrzeugs nach der im Oberbegriff des Patentanspruchs 1 näher definierten Art.

Aus der Praxis sind Kraftfahrzeuge bekannt, bei welchen Spiralkabelantriebe beispielsweise zur Bewegung eines Schiebedachs zwischen einer offenen und einer geschlossenen Position, einer Hutablage eines Cabriolet-Fahrzeugs zwischen einer Position bei offenem Verdeck und einer Position bei geschlossenem Verdeck und zur Bewegung von versenkbaren Fensterscheiben, bewegbaren Dachteilen, Klappen und dergleichen eingesetzt sind.

Ein bekannter, in der DE 203 04 478 U1 näher beschriebener Spiralkabelantrieb weist ein Steigungskabel auf, welches in einem sich an einem Gehäuse abstütztenden Führungsrohr gelagert ist. Das Steigungskabel ist dabei von einem Antriebsritzel antreibbar, welches mit dem Steigungskabel seitlich über ein bis zwei Windungen des Steigungskabels in kämmendem Eingriff verbunden ist. Um das Spiralkabel sicher in Erstreckungsrichtung des Spiralkabels bewegen zu können, muss das Antriebsritzel mit einer entsprechend großen Kraft gegen das Spiralkabel gedrückt werden. Zur Reduzierung einer dabei an einer dem Antriebsritzel gegenüberliegenden Wand des Führungsrohres vorliegenden Reibung, wird das Steigungskabel in diesem Bereich im Wesentlichen in Höhe des kämmenden Eingriffs des Antriebsritzels auf einer dem Antriebsritzel gegenüberliegenden Seite des Steigungskabels von einem Führungsrad abgestützt.

Bei derartigen Spiralkabelantrieben ist nachteilhafterweise eine hohe Präzision der Eingriffsverhältnisse erforderlich, da eine Kraftübertragung von dem Antriebsritzel auf lediglich ein bis zwei Windungsbereiche des Steigungskabels erfolgt.

Zudem ist eine Kraft, die hierbei übertragen werden kann, häufig geringer als es die maximale Belastbarkeit des Steigungskabels an sich zulassen würde, so dass der Spiralkabelantrieb mittels eines Antriebsritzels häufig eine Schwachstelle in einem Kraftfluss zwischen einer Antriebseinrichtung und dem zu bewegenden Teil darstellt. Um zu verhindern, dass bei hohen zu übertragenden Kräften Windungen des Steigungskabels in Erstreckungsrichtung des Steigungskabels verrutschen, ist bei herkömmlichen Spiralkabelantrieben eine hohe Steifigkeit und Genauigkeit der Antriebskomponenten erforderlich.

Es ist Aufgabe der vorliegenden Erfindung, einen Spiralkabelantrieb einer beweglichen Einrichtung eines Kraftfahrzeugs, insbesondere einer Einrichtung eines Verdecks eines Cabriolet-Fahrzeugs, zu schaffen, bei welchem ein Spiralkabel in konstruktiv einfacher Weise durch Aufbringen von geringen Kräften bewegt und stark belastet werden kann.

Diese Aufgabe wird mit einem Spiralkabelantrieb einer beweglichen Einrichtung eines Kraftfahrzeugs nach den Merkmalen des Patentanspruches 1 gelöst.

Vorteilhafte Weiterbildungen eines Spiralkabelantriebs einer beweglichen Einrichtung nach der Erfindung ergeben sich aus den Unteransprüchen.

Die Erfindung sieht einen Spiralkabelantrieb einer beweglichen Einrichtung eines Kraftfahrzeugs vor, mit wenigstens einem mehrere Windungen aufweisenden Spiralkabel, welches zur Bewegung der Einrichtung über eine mechanische Wirkverbindung mit einer Antriebseinrichtung verbunden ist, wobei eine Antriebswandlereinrichtung eine rotatorische Antriebsbewegung der Antriebseinrichtung in eine translatorische Bewegung des Spiralkabels wandelt. Erfindungsgemäß weist die Antriebswandlereinrichtung wenigstens eine die rotatorische Antriebsbewegung aufnehmende Spindelmutter auf, welche das Spiralkabel im Bereich wenigstens einer Windung umgreift.

Ein erfindungsgemäßer Spiralkabelantrieb einer beweglichen Einrichtung eines Kraftfahrzeugs hat gegenüber herkömmlichen Spiralkabelantrieben den Vorteil, dass Kräfte insbesondere bis zur maximalen Belastbarkeit des Spiralkabels über die Spindelmutter auf das Spiralkabel übertragen werden können, da von der Antriebseinrichtung auf das Spiralkabel wirkende Kräfte durch die das Spiralkabel umgreifende Ausbildung der Spindelmutter auf einen größeren Bereich des Spiralkabels verteilt werden, als wenn ein Antriebsritzel in eine oder maximal zwei Windungen des Spiralkabels eingreift.

Die das Spiralkabel umfassende Ausbildung der Spindelmutter erlaubt es weiterhin, dass die Antriebskomponenten gegenüber herkömmlichen Spiralkabelantrieben eine geringere Steifigkeit und Genauigkeit bei gleicher oder sogar verbesserter Funktionalität aufweisen. Zudem ist kein Führungsrad erforderlich, welches bei bekannten Spiralkabelantrieben zur Übertragung der erforderlichen Kräfte nötig ist.

Durch das Vorsehen der Spindelmutter ist eine auf das Spiralkabel im Bereich der Antriebseinrichtung wirkende Reibung stark reduziert, da es für ein sicheres Funktionieren des Spiralkabelantriebs nicht wie bei herkömmlichen Spiralkabelantrieben nötig ist, mit großen Kräften durch ein Antriebsritzel auf das Spiralkabel zu drücken, wodurch eine große Reibung an einer dem Antriebsritzel gegenüberliegenden Seite des Spiralkabels entsteht.

Eine Steigung des Spiralkabels kann dabei derart gewählt werden, dass der Antrieb über die Spindelmutter selbsthemmend ist, so dass eine Umsetzung der Selbsthemmung in einer zusätzlichen Getriebestufe nicht erforderlich ist.

Unter ein Spiralkabel bzw. Steigungskabel fallen alle bekannten Ausbildungen von biegsamen Längskörpern, deren Außenumfang spiralige oder andere periodische Strukturen aufweist, wobei die Strukturen drehbar derart von einer Spindelmutter umgriffen werden können, dass eine Rotationsbewegung der Spindelmutter in eine translatorische Bewegung des Spiralkabels umgesetzt wird.

Um ein Verrutschen von einzelnen Windungen des Spiralkabels auch bei großen auf das Spiralkabel wirkenden Kräften sicher zu verhindern, kann die Spindelmutter bei einer vorteilhaften Ausgestaltung der Erfindung mehrere Windungen des Spiralkabels umfassen. Zudem wird bei einer derartigen Ausgestaltung der Spindelmutter die von der Antriebseinrichtung auf das Spiralkabel übertragene Kraft auf einen größeren Bereich des Spiralkabels übertragen, so dass die Gefahr einer Überlastung des Spiralkabels nahezu ausgeschlossen werden kann. Die Gefahr eines Verrutschens von Windungen des Spiralkabels kann hierdurch wirkungsvoll reduziert werden, und das Spiralkabel kann auf sichere Weise bis zu seiner Belastungsgrenze belastet werden.

Ein einfacher Kraftübertragungsmechanismus von der Antriebseinrichtung auf das Spiralkabel wird bei einer vorteilhaften Ausgestaltung eines erfindungsgemäßen Spiralkabelantriebs dadurch erzielt, dass die Antriebseinrichtung über ein eine Zwischenstufe bildendes Antriebsritzel mit der Spindelmutter zusammenwirkt.

Bei einer konstruktiv einfachen Ausgestaltung der Erfindung wird das Spiralkabel bzw. die Spindelmutter über ein von der Antriebseinrichtung betätigbares Schneckengetriebe angetrieben, welches insbesondere über das Antriebsritzel mit der Spindelmutter zusammenwirkt. Sowohl zwischen dem Antriebsritzel und der Spindelmutter als auch zwischen dem Schneckengetriebe und dem Antriebsritzel kann dabei eine gewünschte Übersetzung gewählt werden.

Die Antriebseinrichtung wirkt bei einer einfachen Ausbildung eines erfindungsgemäßen Spiralkabelantriebs mit einer ein Außenritzel bildenden Außenverzahnung der Spindelmutter zusammen, welche insbesondere mit dem mit dem Schneckengetriebe kämmenden Antriebsritzel wirkverbunden ist.

Um bei einer von der Antriebseinrichtung auf das Spiralkabel wirkenden Kraft eine Bewegung der Spindelmutter gegenüber der Antriebseinrichtung in Erstreckungsrichtung des Spiralkabels zu verhindern und ein sicheres Zusammenwirken mit der Antriebseinrichtung auf einfache Weise zu gewährleisten, ist die Spindelmutter vorzugsweise entgegen einer Bewegungsrichtung des Spiralkabels an dem Gehäuse des Spiralkabelantriebs abgestützt.

Ein funktionssicherer Spiralkabelantrieb wird bei einer vorteilhaften Ausbildung der Erfindung durch eine verdrehfeste Lagerung des Spiralkabels insbesondere in seinen Endbereichen gegenüber der Spindelmutter sichergestellt.

Es kann hierzu vorgesehen sein, dass das Spiralkabel verdrehfest mit der beweglichen Einrichtung verbunden ist. Eine verdrehfeste Anordnung des Spiralkabels an der beweglichen Einrichtung kann dabei über wenigstens eine an das Spiralkabel angespritzte Lasche aus Kunststoff realisiert sein, welche mit der beweglichen Einrichtung insbesondere verschraubbar ist.

Um auch ein Verdrehen des Spiralkabels an einem der beweglichen Einrichtung gegenüberliegenden Ende des Spiralkabels gegenüber der Spindelmutter wirksam verhindern zu können, kann es bei einer einfachen Ausgestaltung der Erfindung vorgesehen sein, dass das Spiralkabel insbesondere auf einer der Einrichtung zugewandten Seite über eine fest mit dem Spiralkabel verbundene Materialfahne drehfest in einem das Spiralkabel wenigstens bereichsweise umfassenden Führungsrohr gelagert ist, wobei die Materialfahne hierzu in einem in Erstreckungsrichtung des Spiralkabels verlaufendem Schlitz des Führungsrohrs geführt ist. Die Materialfahne kann dabei auf einfache Weise an das Spiralkabel angebunden werden, wenn sie in einem Bereich an das Spiralkabel angebunden ist, in welchem keine Windungen vorliegen.

Eine Erhöhung der Lebensdauer des Spiralkabels kann bei einer vorteilhaften Ausgestaltung eines erfindungsgemäßen Spiralkabelantriebs durch das Vorsehen einer Schutzeinrichtung erreicht werden, welche eine Reibung von funktionalen Elementen des Spiralkabels bei einer Bewegung des Spiralkabels gegenüber dem Führungsrohr verhindert. Die Schutzeinrichtung kann dabei insbesondere als Flockung mit Flockfäden ausgebildet sein, mit welcher das Spiralkabel zumindest bereichsweise ummantelt ist, wobei sich die Flockfäden zwischen den Windungen des Spiralkabels in montiertem Zustand weiter radial nach außen erstrecken als die Windungen des Spiralkabels, so dass die durch einen Draht gebildeten helixförmigen Windungen des Spiralkabels bei einer Bewegung des Spiralkabels in dem Führungsrohr nicht an den Wänden des Führungsrohres reiben.

Bei verschiedenen beweglichen Einrichtungen ist es zur genaueren, zuverlässigeren und eine günstigere Krafteinleitung aufweisenden Bewegung vorteilhaft, wenn die jeweilige bewegliche Einrichtung an insbesondere zwei Seiten von einem Spiralkabel angetrieben wird. Um dies auf einfache konstruktive Weise umzusetzen, kann es bei einer vorteilhaften Ausbildung eines Spiralkabelantriebs vorgesehen sein, dass mittels der Antriebseinrichtung wenigstens ein erstes und ein zweites Spiralkabel insbesondere synchron antreibbar sind.

Um eine derartige bewegliche Einrichtung auf einfache Weise mit einem Spiralkabelantrieb antreiben zu können, kann die Antriebseinrichtung über das Antriebsritzel mit den jeweiligen Spindelmuttern der Spiralkabel direkt zusammenwirken, so dass die Spiralkabel insbesondere synchron bewegt werden.

Alternativ hierzu kann wenigstens ein zweites Spiralkabel dadurch von der Antriebseinrichtung antreibbar sein, dass eine Spindelmutter des zweiten Spiralkabels mit der Spindelmutter des ersten Spiralkabels zusammenwirkt und über diese angetrieben wird. Die zweite Spindelmutter kann dabei nur indirekt von dem Antriebsritzel angetrieben sein.

Diese beiden Antriebsmöglichkeiten von Spiralkabeln können bei Spiralkabelantrieben mit mehreren Spiralkabeln auch kombiniert werden.

Die von dem Spiralkabelantrieb antreibbare bewegliche Einrichtung kann als Schiebedachvorrichtung oder als Verdeckvorrichtung eines Cabriolet-Fahrzeugs, insbesondere als ein bewegliches Verdeckelement, eine Gestängeklappe, ein Deckel, ein Verschluss, eine Hutablage oder dergleichen ausgebildet sein. Im Prinzip können alle beweglichen Teile eines Kraftfahrzeugs über einen Spiralkabelantrieb angetrieben werden.

Weitere Vorteile und vorteilhafte Ausführungen eines Spiralkabelantriebs einer beweglichen Einrichtung eines Kraftfahrzeugs nach der Erfindung ergeben sich aus der zeichnung und der Beschreibung.

Nachfolgend ist ein vorteilhaftes Ausführungsbeispiel eines erfindungsgemäßen Spiralkabelantriebs einer beweglichen Einrichtung eines Kraftfahrzeugs anhand der zeichnung prinzipmäßig beschrieben.

Es zeigt:
- Fig. 1: eine vereinfachte Draufsicht auf einen Dachbereich eines Kraftfahrzeugs, wobei ein mittels eines Spiralkabelantriebs bewegbares Schiebedach einer Schiebedachvorrichtung ersichtlich ist;
- Fig. 2: eine vereinfachte dreidimensionale Darstellung des Spiralkabelantriebs der Fig. 1 in Alleinstellung, wobei ersichtlich ist, dass der Spiralkabelantrieb mit zwei Spiralkabeln ausgebildet ist;
- Fig. 3: eine vereinfachte dreidimensionale Darstellung eines Ausschnitts des Spiralkabelantriebs der Fig. 2, wobei ein Gehäuse des Spiralkabelantriebs und Führungsrohre der Spiralkabel durchsichtig dargestellt sind;
- Fig. 4: eine vereinfachte Seitenansicht des Spiralkabelantriebs der Fig. 3;
- Fig. 5: eine vereinfachte dreidimensionale Darstellung des Spiralkabelantriebs der Fig. 3 ohne das Gehäuse des Spiralkabelantriebs;
- Fig. 6: eine vereinfachte Seitenansicht eines Ausschnitts eines Spiralkabels des Spiralkabelantriebs, wobei eine mit dem Spiralkabel zusammenwirkende Spindelmutter alternativ ausgebildet ist;
- Fig. 7: eine vereinfachte dreidimensionale Darstellung der Spindelmutter der Fig. 6 in Alleinstellung, wobei die Spindelmutter entlang einer Mittellängsebene geschnitten gezeigt ist; und
- Fig. 8: eine vereinfachte Schnittdarstellung eines Ausschnitts des Spiralkabels des Spiralkabelantriebs in Alleinstellung.

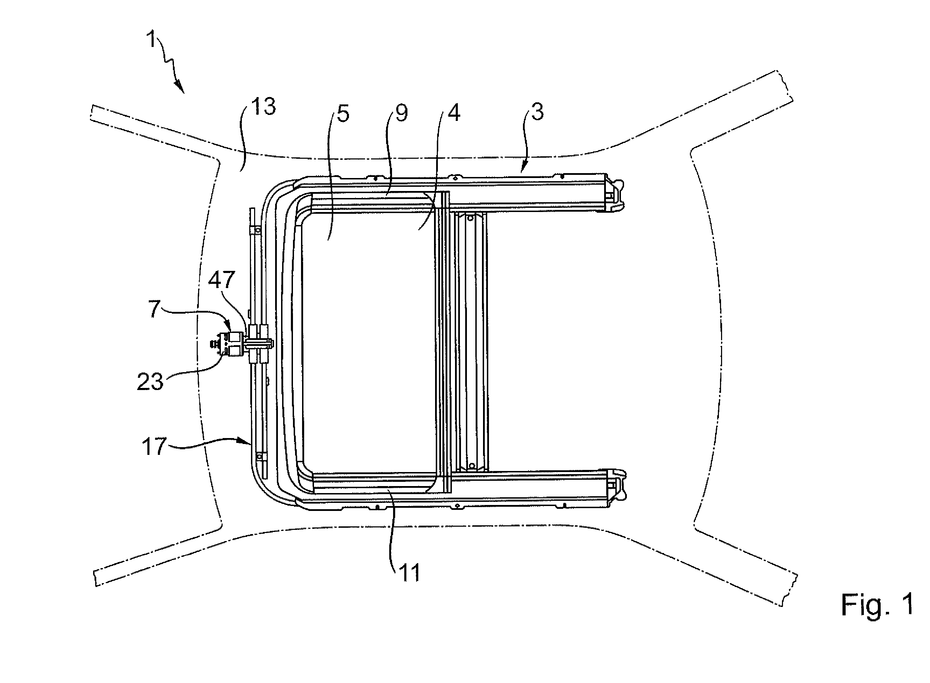

In Fig. 1 ist eine Draufsicht auf einen Dachbereich eines Kraftfahrzeugs 1 mit einer Schiebedachvorrichtung 3 gezeigt, welche mit einem beweglichen Schiebedach 4 ausgebildet ist. Das Schiebedach 4 ist zwischen einer eine Öffnung 5 freigebenden, offenen Position und einer die Öffnung 5 überdeckenden, geschlossenen Position mittels eines Spiralkabelantriebs 7 bewegbar.

Das Schiebedach 4 ist mittels nicht näher ersichtlichen Führungselementen in Führungsschienen 9, 11 gelagert und in Längsrichtung des Kraftfahrzeugs 1 verlagerbar, wobei die Führungselemente, die Führungsschienen 9, 11 und der Spiralkabelantrieb 7 unterhalb einer Außenhaut 13 des Kraftfahrzeugs 1 angeordnet sind.

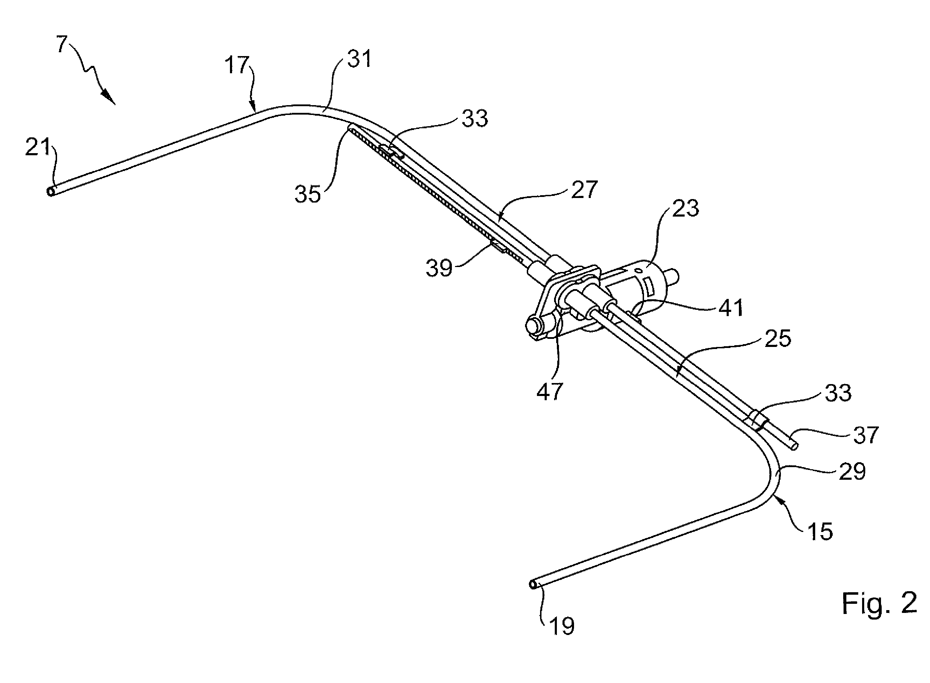

Der Spiralkabelantrieb 7, welcher in der Fig. 2 in Alleinstellung in einer Position bei offenem Schiebedach 4 gezeigt ist, ist in einem fahrzeugfrontseitigen Bereich der Schiebedachvorrichtung 3 angeordnet und weist zwei Spiralkabel 15, 17 auf. Ein erstes Spiralkabel 15 ist mit einem ersten Ende 19 an einem in der rechten Führungsschiene 9 gelagerten Führungselement des Schiebedachs 4 angebunden. Hierzu kann an das erste Ende 19 ein nicht näher ersichtliches Kunststoffelement angespritzt werden, welches an das Führungselement oder einen anderen Bereich des Schiebedachs 4 anschraubbar und somit fest und entgegen einer Verdrehung gesichert mit dem Schiebedach 4 verbindbar ist.

Analog hierzu ist ein baugleich mit dem ersten Spiralkabel 15 ausgebildetes zweites Spiralkabel 17 mit einem ersten Ende 21 an einem in der linken Führungsschiene 11 gelagerten Führungselement festgelegt. Alternativ hierzu können die Spiralkabel mit ihren ersten Enden auch in anderen Bereichen mit dem Schiebedach verbunden sein.

Die Spiralkabel 15, 17 sind jeweils in Führungsrohren 25, 27 gelagert, welche den Verlauf der flexiblen Spiralkabel 15, 17 vorgeben. Die Führungsrohre 25, 27 weisen dabei jeweils in einem dem ersten Ende 19, 21 abgewandten Endbereich eine mit dem Führungsrohr 25, 27 verbundene Lasche 33 auf, mittels welcher die Führungsrohre 25, 27 in einem Dachbereich des Kraftfahrzeugs 1 festlegbar sind. Selbstverständlich können mehrere Festlegungseinrichtungen vorgesehen sein.

Die Spiralkabel 15, 17 verlaufen im Bereich einer Antriebseinrichtung 23 des Spiralkabelantriebs 7 in Fahrzeugquerrichtung und erstrecken sich in Richtung ihrer ersten Enden 19, 21 nach einem der von den Führungsrohren 25, 27 vorgegebenen Kurvenbereichen 29, 31 in Fahrzeuglängsrichtung bis zu ihrer Anordnung an dem Schiebedach 4.

Zur Bewegung des Schiebedachs 4 können die Spiralkabel 15, 17 von der Antriebseinrichtung 23 mittels einer Antriebswandlereinrichtung 48 in der vorliegenden Ausführung quer zur Anordnung der Antriebseinrichtung 23 translatorisch in den Führungsrohren 25, 27 bewegt werden. Ausgehend von dieser translatorischen Bewegung der Spiralkabel 15, 17 im Bereich der Antriebseinrichtung 23 in Fahrzeugquerrichtung werden die mit dem Schiebedach 4 verbundenen ersten Enden 19, 21 in Fahrzeuglängsrichtung bewegt, so dass das Schiebedach 4 zwischen seiner offenen Position und seiner geschlossenen Position verfahrbar ist. Selbstverständlich kann das Schiebedach 4 auch in beliebigen Zwischenpositionen zwischen der offenen Position und der geschlossenen Position angeordnet werden.

Die Spiralkabel 15, 17 sind dabei derart an die Antriebseinrichtung 23 gekoppelt, dass das erste Spiralkabel 15 in entgegengesetzter Richtung wie das zweite Spiralkabel 17 im Bereich der Antriebseinrichtung 23 bewegt wird, wodurch sich die Spiralkabel 15, 17 im Bereich ihrer ersten Enden 19, 21 in die gleiche Richtung bewegen. Um ein Verklemmen des Schiebedachs 4 bei einer Öffnungs- bzw. Schließbewegung zu verhindern, sind die Bewegungen des ersten Spiralkabels 15 und des zweiten Spiralkabels 17 miteinander synchronisiert.

Ein sicheres und präzises Funktionieren des Spiralkabelantriebs 7 wird dabei dadurch sichergestellt, dass sich die Spiralkabel 15, 17 nicht gegeneinander verdrehen. Einenends wird dies über die verdrehfeste Festlegung der ersten Enden 19, 21 der Spiralkabel 15, 17 an dem Schiebedach 4 umgesetzt. An den den ersten Enden 19, 21 abgewandten zweiten Enden 35, 37 sind hierzu Materialfahnen 39, 41 fest mit den Spiralkabeln 15, 17 verbunden, welche in in Erstreckungsrichtung der Führungsrohre 25, 27 verlaufenden Schlitzen 43, 45 angeordnet sind. Bei einer translatorischen Bewegung der Spiralkabel 15, 17 in den Führungsrohren 25, 27 werden die Materialfahnen 39, 41 in den Schlitzen 43, 45 bewegt und somit eine Verdrehung der Spiralkabel 15, 17 verhindert.

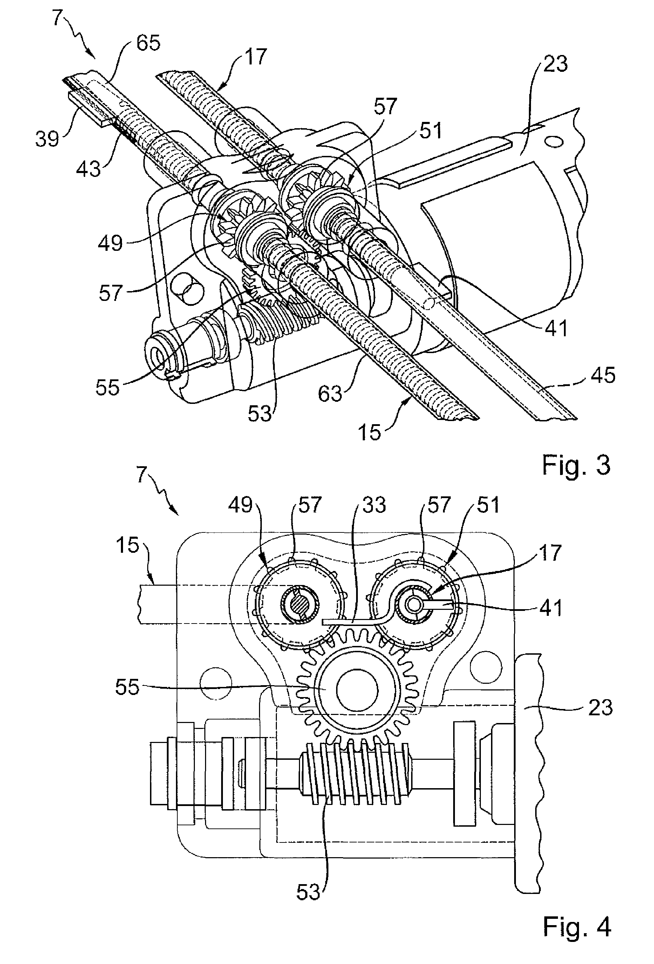

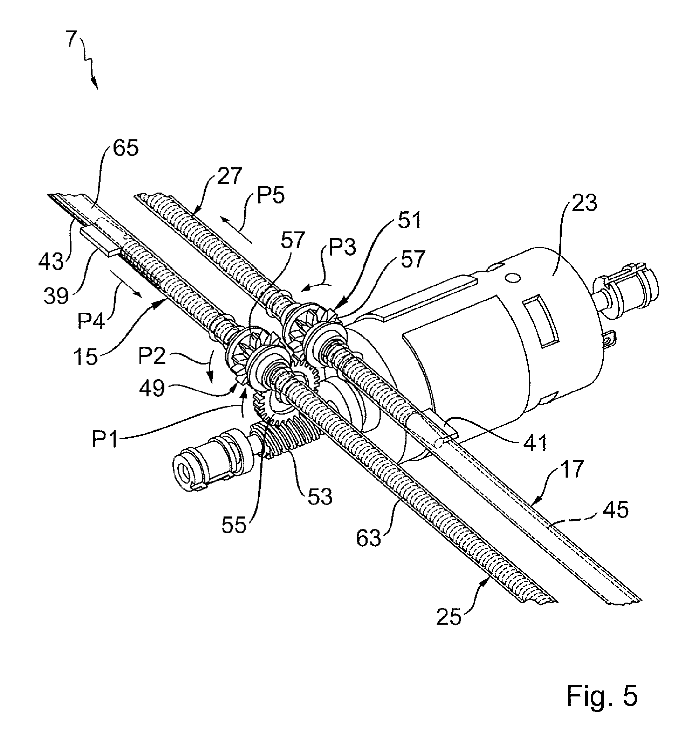

In den Fig. 3, Fig. 4 und Fig. 5 ist ein Ausschnitt des Spiralkabelantriebs 7 im Bereich der Antriebseinrichtung 23 und der Antriebswandlereinrichtung 48 näher ersichtlich, wobei ein Gehäuse 47 des Spiralkabelantriebs 7 der Übersichtlichkeit wegen in den Fig. 3 und 4 durchsichtig dargestellt ist.

Insbesondere in Fig. 3 ist ersichtlich, dass die Materialfahnen 39, 41 in einem Bereich an den Spiralkabeln 15, 17 angeordnet sind, an denen diese keine Windungen aufweisen.

Zur Bewegung der Spiralkabel 15, 17 treibt die Antriebseinrichtung 23 ein Schneckengetriebe 53 an, welches in Eingriff mit einem Antriebsritzel 55 steht. Das Antriebsritzel 55 wiederum steht in Eingriff mit Spindelmuttern 49, 51 der Antriebswandlereinrichtung 48, welche die rotatorische Antriebsbewegung des Antriebsritzels 55 aufnehmen und in eine translatorische Bewegung des Spiralkabels 15 bzw. 17 wandeln. Dabei greift das Antriebsritzel in eine Außenverzahnung 57 der Spindelmuttern 49, 51 ein.

Je nach Steigung der Windungen der Spiralkabel 15, 17 ist der Antriebsmechanismus dabei selbsthemmend und eine Selbsthemmung muss nicht, wenn gewünscht, in einer anderen Getriebestufe umgesetzt werden.

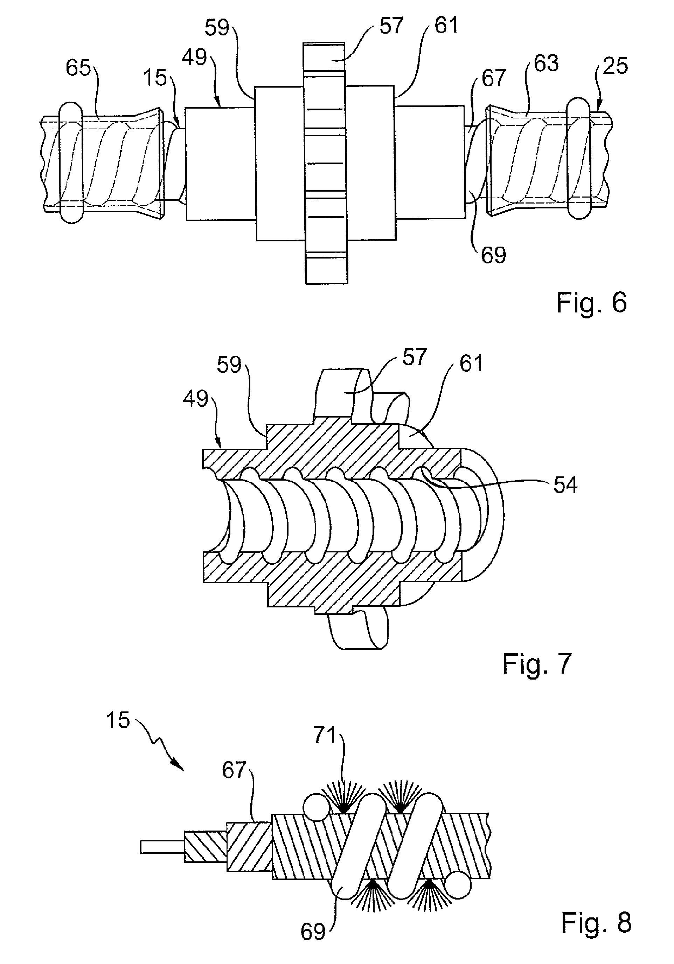

Die in den Fig. 3 bis Fig. 5 gezeigte Spindelmutter 49 ist baugleich zu der Spindelmutter 51 ausgebildet und wird im Folgenden stellvertretend für diese beschrieben. Im Wesentlichen Baugleich und lediglich etwas vereinfacht ausgeführt ist die in den Fig. 6 und Fig. 7 dargestellte Spindelmutter 49 ausgebildet, welche daher mit demselben Bezugszeichen bezeichnet ist.

Die Spindelmutter 49 ist in einem Bereich des Spiralkabels 15 angeordnet, in welchem das Spiralkabel 15 nicht von dem Führungsrohr 25 umfasst ist, so dass die Spindelmutter 49 direkt mit dem Spiralkabel 15 zusammenwirkt. Das Führungsrohr 25 ist dementsprechend zweiteilig mit einem dem ersten Ende 19 des Spiralkabels 15 zugewandten ersten Teil 63 und einem dem zweiten Ende 35 des Spiralkabels 15 zugewandten zweiten Teil 65 ausgebildet.

Die Spindelmutter 49 umgreift bzw. umschließt mehrere, vorliegend sechs Windungen des Spiralkabels 15 und ist derart komplementär zu dem Spiralkabel 15 ausgebildet, dass die Windungen des Spiralkabels 15 eng anliegend in einer spiralförmigen bzw. spindelförmigen Ausnehmung 54 der Spindelmutter 49 Platz finden. Bei einer Drehung der Spiralmutter 49 gegenüber dem Spiralkabel 15 entsteht eine durch eine Steigung der Windungen des Spiralkabels 15 bedingte translatorische Bewegung des Spiralkabels 15 gegenüber der Spindelmutter 49, welche bereits durch geringe Kräfte von der Spindelmutter 49 auf das Spiralkabel 15 übertragen werden kann.

Da die Spindelmutter 49 über einen ersten Absatz 59 und einen zweiten Absatz 61 in dem Gehäuse 47 des Spiralkabelantriebs 7 festgelegt ist, resultiert aus einer Drehung der Spindelmutter 49 eine translatorische Bewegung des Spiralkabels 15 gegenüber der Spindelmutter 49 in dem Führungsrohr 25, welches ortsfest an die Außenhaut 13 des Kraftfahrzeugs 1 angebunden ist.

Wie in den Fig. 3, 4 und 5 ersichtlich ist, stehen sowohl eine Außenverzahnung 57 der Spindelmutter 49 als auch eine Außenverzahnung 57 der Spindelmutter 51 in Eingriff mit dem Antriebsritzel 55. Bei einer Drehung des Antriebsritzels 55 in Richtung des Pfeils P1 wird die Spindelmutter 49 in Richtung des Pfeils P2 und die Spindelmutter 51 in dieselbe Richtung des Pfeils P3 gedreht, wobei das Spiralkabel 15 hierdurch in Richtung des Pfeils P4 und das Spiralkabel 17 in Richtung des Pfeils P5, also in die entgegengesetzte Richtung des Spiralkabels 15, bewegt wird.

Bei einer Drehung des Antriebsritzels 55 in umgekehrter Drehrichtung werden alle Dreh- und Bewegungsrichtungen umgekehrt, so dass die Spiralkabel 15, 17 ebenfalls in einander entgegengesetzte Richtung bewegt werden. Aus den jeweils entgegengesetzten Bewegungsrichtungen der Spiralkabel 15, 17 im Bereich der Spindelmuttern 49, 51 resultiert eine gleichgerichtete Bewegung der Spiralkabel 15, 17 im Bereich ihrer ersten Enden 19, 21.

In Fig. 8 ist ein Ausschnitt des Spiralkabels 15 in Alleinstellung gezeigt. Dabei ist ersichtlich, dass das Spiralkabel 15 eine drahtartige biegsame Welle 67 aufweist, auf welche ein Windungen bildender Wendeldraht 69 ohne eine Rückdrehung der biegsamen Welle 67 mit Einprägung eng anliegend gewickelt ist.

Um einen Verschleiß der biegsamen Welle 67 und insbesondere des Wendeldrahts 69 bei einer Bewegung des Spiralkabels 15 in dem Führungsrohr 25 zu verringern, ist eine mit Flockfäden 71 ausgebildete Schutzeinrichtung vorgesehen, wobei die Flockung mit den Flockfäden 71 das Spiralkabel 15 umgreift und auf das Spiralkabel 15 aufgeklebt ist. Die Flockung ist dabei derart ausgebildet, dass sich die Flockfäden 71 radial über die Windungen des Wendeldrahts 69 erstrecken, so dass bei einer Bewegung des Spiralkabels 15 in dem Führungsrohr 25 lediglich die Flockfäden 71 in Kontakt mit dem Führungsrohr 25 stehen.

Bei einer alternativen Ausführung der Erfindung können mittels eines Spiralkabelantriebs andere bewegbare Einrichtungen des Kraftfahrzeugs angetrieben werden. Insbesondere Verdeckelemente eines Soft-Top-Verdecks oder Hard-Top-Verdecks wie Gestängeklappen, Verschlüsse, eine Hutablage oder dergleichen können von einem Spiralkabelantrieb bewegt werden, wobei hierfür ein oben beschriebener Mechanismus mit zwei Spiralkabeln vorgesehen sein kann, oder alternativ hierzu ein Mechanismus mit einem oder mehreren Spiralkabeln.

Genauso ist es denkbar, mit einem Antriebsritzel auch drei oder mehr Spindelmuttern mit entsprechend zugeordneten Spiralkabeln mit gleicher oder teilweise entgegengesetzter Bewegungsrichtung anzutreiben.

Bei einer entsprechend groß ausgebildeten Steigung des Wendeldrahts kann der Spiralkabelantrieb auch als Abtrieb genutzt werden.

## Patentansprüche

1. Spiralkabelantrieb einer beweglichen Einrichtung (3) eines Kraftfahrzeugs (1), mit wenigstens einem mehrere Windungen aufweisenden Spiralkabel (15, 17), welches zur Bewegung der Einrichtung (3) über eine mechanische Wirkverbindung mit einer Antriebseinrichtung (23) verbunden ist, wobei eine Antriebswandlereinrichtung (48) eine rotatorische Antriebsbewegung der Antriebseinrichtung (23) in eine translatorische Bewegung des Spiralkabels (15, 17) wandelt,
**dadurch gekennzeichnet,**
**dass** die Antriebswandlereinrichtung (48) wenigstens eine die rotatorische Antriebsbewegung aufnehmende Spindelmutter (49, 51) aufweist, welche das Spiralkabel (15, 17) im Bereich wenigstens einer Windung umgreift.

2. Spiralkabelantrieb nach Anspruch 1,
**dadurch gekennzeichnet,**
**dass** die Spindelmutter (49, 51) mehrere Windungen des Spiralkabels (15, 17) umfasst.

3. Spiralkabelantrieb nach einem der Ansprüche 1 oder 2,
**dadurch gekennzeichnet,**
**dass** die Antriebseinrichtung (23) über ein Antriebsritzel (55) mit der Spindelmutter (49, 51) zusammenwirkt.

4. Spiralkabelantrieb nach Anspruch 3,
**dadurch gekennzeichnet,**
**dass** die Antriebseinrichtung (23) über ein Schneckengetriebe (53b) mit dem Antriebsritzel (55) zusammenwirkt.

5. Spiralkabelantrieb nach einem der Ansprüche 1 bis 4,
**dadurch gekennzeichnet,**
**dass** die Antriebseinrichtung (23) mit einer Außenverzahnung (57) der Spindelmutter (49, 51) zusammenwirkt.

6. Spiralkabelantrieb nach einem der Ansprüche 1 bis 5,
**dadurch gekennzeichnet,**
**dass** die Spindelmutter (49, 51) entgegen einer Bewegungsrichtung des Spiralkabels (15, 17) an einem Gehäuse (47) des Spiralkabelantriebs (7) abgestützt ist.

7. Spiralkabelantrieb nach einem der Ansprüche 1 bis 6,
**dadurch gekennzeichnet,**
**dass** das Spiralkabel (15, 17) insbesondere in seinen Endbereichen (19, 21, 35, 37) verdrehfest gegenüber der Spindelmutter (49, 51) gelagert ist.

8. Spiralkabelantrieb nach Anspruch 7,
**dadurch gekennzeichnet,**
**dass** das Spiralkabel (15, 17) verdrehfest mit der Einrichtung (3) verbunden ist.

9. Spiralkabelantrieb nach einem der Ansprüche 7 oder 8,
**dadurch gekennzeichnet,**
**dass** das Spiralkabel (15, 17) insbesondere auf einer der Einrichtung (3) abgewandten Seite der Antriebseinrichtung (23) über eine fest mit dem Spiralkabel (15, 17) verbundene Materialfahne (39, 41) drehfest in einem das Spiralkabel (15, 17) wenigstens bereichsweise umfassenden Führungsrohr (25, 27) gelagert ist, wobei die Materialfahne (39, 41) hierzu in einem in Erstreckungsrichtung des Spiralkabels (15, 17) verlaufenden Schlitz (43, 45) des Führungsrohrs (25, 27) geführt ist.

10. Spiralkabelantrieb nach einem der Ansprüche 1 bis 9,
**dadurch gekennzeichnet,**
**dass** das Spiralkabel (15, 17) eine Schutzeinrichtung (71) aufweist, welche eine Reibung von funktionalen Elementen (67, 69) des Spiralkabels (15, 17) bei einer Bewegung des Spiralkabels (15, 17) gegenüber dem Führungsrohr (25, 27) verhindert.

11. Spiralkabelantrieb nach einem der Ansprüche 1 bis 10,
**dadurch gekennzeichnet,**
**dass** mittels der Antriebseinrichtung (23) wenigstens ein erstes und ein zweites Spiralkabel (15, 17) insbesondere synchron antreibbar sind.

12. Spiralkabelantrieb nach Anspruch 11,
**dadurch gekennzeichnet,**
**dass** die Antriebseinrichtung (23) über das Antriebsritzel (55) mit den jeweiligen Spindelmuttern (49, 51) der Spiralkabel (15, 17) direkt zusammenwirkt.

13. Spiralkabelantrieb nach einem der Ansprüche 11 oder 12,
**dadurch gekennzeichnet,**
**dass** wenigstens ein zweites Spiralkabel (17 bzw. 15) dadurch von der Antriebseinrichtung (23) antreibbar ist, dass eine Spindelmutter (51 bzw. 49) des zweiten Spiralkabels (17 bzw. 15) mit der Spindelmutter (49 bzw. 51) des ersten Spiralkabels (15 bzw. 17) zusammenwirkt.

14. Spiralkabelantrieb nach einem der Ansprüche 1 bis 13,
**dadurch gekennzeichnet,**
**dass** die von dem Spiralkabelantrieb (7) antreibbare Einrichtung als eine Schiebedachvorrichtung (3) oder als eine Verdeckeinrichtung eines Cabriolet-Fahrzeugs, insbesondere als ein bewegliches Verdeckelement, eine Gestängeklappe, ein Deckel, ein Verschluss oder eine Hutablage, ausgebildet ist.
